**Europäisches Patentamt**

**European Patent Office**

**Office européen des brevets**

(19)

(11) Veröffentlichungsnummer: **0 261 076**
**A1**

(12) **EUROPÄISCHE PATENTANMELDUNG**

(21) Anmeldenummer: **87810482.7**

(22) Anmeldetag: **25.08.87**

(51) Int. Cl.⁴: **G 03 B 27/46**
**G 03 B 27/02**

(30) Priorität: **29.08.86 CH 3474/86**

(43) Veröffentlichungstag der Anmeldung:
**23.03.88 Patentblatt 88/12**

(84) Benannte Vertragsstaaten:
**BE DE FR GB IT LU NL**

(71) Anmelder: **Germann + Gsell AG**
**Fegistrasse 1**
**CH-8957 Spreitenbach (CH)**

(72) Erfinder: **Germann, Peter**
**Gugelmatt 39**
**CH-8967 Widen (CH)**

(74) Vertreter: **Seifert, Helmut E.**
**RITSCHER & SEIFERT Patentanwälte Auf der Mauer 4**
**CH-8001 Zürich (CH)**

(54) **Vorrichtung zum Kopieren von gerahmten Farbdiapositiven auf Farbumkehrmaterial.**

(57) Die Vorrichtung enthält eine Einrichtung (18) zum Transportieren von Dias von einer Eingabestation (14) durch eine Dichtemessstation (42, 43), eine Projektionseinrichtung (51, 52) zu einer Ausgabestation (32). Weiter ist eine elektronische Steuereinrichtung (62) vorgesehen, die den Verschluss und die Blende der Projektionseinrichtung in Abhängigkeit von den Ausgangssignalen der Dichtemessstation und in Uebereinstimmung mit dem Vorschub der Transporteinrichtung steuert. Die Vorrichtung fasst alle für das Kopieren von Dias erforderlichen Einrichtungen an einem Arbeitsplatz zusammen und ermöglicht einen rascheren Arbeitsablauf.

Fig. 1

EP 0 261 076 A1

## Beschreibung

<u>Vorrichtung zum Kopieren von gerahmten Farbdiapositiven auf Farbumkehrmaterial</u>

Die vorliegende Erfindung betrifft eine Vorrichtung zum Kopieren von gerahmten Farbdiapositiven auf Farbumkehrmaterial mit einer Einrichtung zum integralen oder bereichsweisen Messen der Lichtdurchlässigkeit der Dias in den Grundfarben des Kopiermaterials mit einer Projektionseinrichtung zum Abbilden von Farbauszügen des Dias auf dem Kopiermaterial und mit einer elektronischen Steuereinrichtung, die die Belichtungszeit für jeden Farbauszug in Abhängigkeit von den gemessenen Lichtdurchlässigkeiten und von mittels einer Tastatur eingegebenen Korrekturwerten bestimmt, sowie nach jeder vollständigen Belichtung den Weitertransport des Kopiermaterials in der Bildbühne der Projektionseinrichtung steuert.

Das Kopieren von gerahmten Farbdiapositiven erfordert mehrere Arbeitsgänge, die bei den bisher für das gewerbliche Kopieren vorgesehenen Anlagen an getrennten Arbeitsplätzen und von mehreren Bedienungspersonen ausgeführt werden. Praktisch alle bekannten Anlagen haben einen Arbeitsplatz, an dem die vom Kunden auf der Auftragstasche notierten Angaben, insbesondere die von jedem Dia gewünschte Anzahl Kopien, auf den Diarähmchen vermerkt werden. Dazu kommt ein weiterer Arbeitsplatz, an dem eine erfahrene Bedienungsperson mögliche und insbesondere durch fehlerhafte Belichtung bewirkte Abweichungen des Farbtons und der Farbdichte des Dias beim Vergleich mit einem gut belichteten Eich- oder Standarddia visuell feststellt und geeignete Korrekturwerte für die Standardbelichtungszeiten ebenfalls auf dem Diarähmchen notiert. An noch einem Arbeitsplatz werden die Dias gereinigt, die auf dem Rähmchen notierten Angaben betreffend die Anzahl der herzustellenden Kopien und die Korrekturwerte für die Belichtung in ein Belichtungssteuergerät eingegeben, das Dia in das Kopierfenster eines Projektionsgeräts gelegt und das Kopiermaterial belichtet. Abschliessend werden an noch einem weiteren Arbeitsplatz die Kopien visuell geprüft und solche Dias, deren Kopien ungenügend sind, zum nochmaligen Kopieren mit korrigierten oder nochmals korrigierten Belichtungswerten an den dafür vorgesehenen Arbeitsplatz zurückgegeben.

Bei dieser Arbeitsweise ist das visuelle Bewerten des Farbtons und der Farbdichte sowie das Bestimmen von Korrekturwerten stark abhängig von der Erfahrung und der Aufmerksamkeit der Bedienungsperson. Es sind darum schon Einrichtungen bekannt, die die Lichtdurchlässigkeit des Dias in den drei Grundfarben des Kopiermaterials messen und mit einem elektronischen Rechner zusammenwirken, der diesen Messwerten die Belichtungszeiten für die drei Farbauszüge berechnet. Weiter sind Messeinrichtungen dieser Art bekannt, die die Lichtdurchlässigkeit der Dias nicht integral, sondern bereichsweise bestimmen, die Bereiche in Abhängigkeit von ihrer Lage auf dem Dia unterschiedlich gewichten und die Belichtungszeit aus der Summe der gewichteten Bereiche berechnen.

Gesamthaft ist die beschriebene Arbeitsweise personalintensiv, erfordert viel Raum für die einzelnen Arbeitsplätze und eine relativ lange Bearbeitungs- oder Durchlaufzeit, weil die Dias an jedem Arbeitsplatz aus der zugehörigen Auftragstasche entnommen und nach der Bearbeitung wieder darin versorgt werden, auch wenn die einzelnen Arbeitsplätze nahe be nachbart oder mit Transporteinrichtungen miteinander verbunden sind.

Es ist darum das Ziel der vorliegenden Erfindung, eine Vorrichtung zum Kopieren von gerahmten Farbdiapositiven auf Farbumkehrmaterial zu schaffen, die alle bisher erforderlichen Arbeitsplätze vereinigt und bei der praktisch alle Arbeitsgänge von einer elektronischen Steuereinrichtung gesteuert und überwacht werden, so dass nur noch eine Bedienungsperson erforderlich ist.

Erfindungsgemäss wird diese Aufgabe mit einer Vorrichtung der eingangs beschriebenen Art gelöst, die dadurch gekennzeichnet ist, dass für die Ausführung aller zum Kopieren erforderlichen Arbeitsgänge an einem Arbeitsplatz eine Transporteinrichtung für den schrittweisen Transport der Dias von einer Eingabestation zur Einrichtung zum Messen der Lichtdurchlässigkeit zur Projektionseinrichtung und zu einer Ausgabestation vorgesehen ist und die elektronische Steuereinrichtung weiter die Schrittlänge und die Standzeit zwischen aufeinanderfolgenden Schritten der Transporteinrichtung sowie das Aktivieren der Einrichtung zum Messen der Lichtdurchlässigkeit und der Projektionseinrichtung synchron mit den Schritten der Transporteinrichtung steuert.

Wegen der kompakten Bauweise benötigt die erfindungsgemässe Vorrichtung wesentlich weniger Raum als die bisher gebräuchlichen Anlagen. Weil alle manuell auszuführenden Arbeitsgänge beim Eingeben der Dias in die Eingabestation ausgeführt werden, kann die Vorrichtung von einer einzigen Person bedient werden, und weil die Dias zwischen den einzelnen Arbeitsgängen nicht mehr manipuliert werden, ist auch eine Verkürzung der Bearbeitungszeit auf etwa die Hälfte möglich, was bei der grossen Anzahl gewerblich kopierter Dias einen wesentlichen ökonomischen Vorteil ermöglicht.

Bei einer bevorzugten Ausführungsform der Vorrichtung ist zum Verbessern der Uebereinstimmung des Farbtons und der -sättigung der Kopien mit denen des Dias bzw. zum Eliminieren von Aenderungen des Farbtons und der -sättigung der Kopien gegenüber dem Dia, die durch unterschiedliche Farbgebung in den Schichten unterschiedlicher Diafabrikate bewirkt sind, zusätzlich zu der Einrichtung zum Messen der Lichtdurchlässigkeit der Dias in den Grundfarben des Kopiermaterials eine mit der elektronischen Steuereinrichtung zusammenwirkende Einrichtung zum Messen der Lichtdurchlässigkeit der Dias in den entsprechenden Grundfarben des menschlichen Auges vorgesehen.

Das Einbeziehen der spektralen Empfindlichkeit des menschlichen Auges bzw. des Unterschieds zwischen dieser Empfindlichkeit gegenüber der spektralen Empfindlichkeit des Kopiermaterials ermöglicht, Kopien mit praktisch gleichem Farbton und gleicher Farbsättigung wie das Dia herzustellen und die unterschiedliche spektrale Empfindlichkeit von unterschiedlichen Kopiermaterialien praktisch auszugleichen.

Nachfolgend werden der prinzipielle Aufbau der erfindungsgemässen Vorrichtung und deren Betrieb mit Hilfe der einzigen Figur beschrieben, die einen beispielsweisen Aufbau einer Vorrichtung gemäss der Erfindung zeigt.

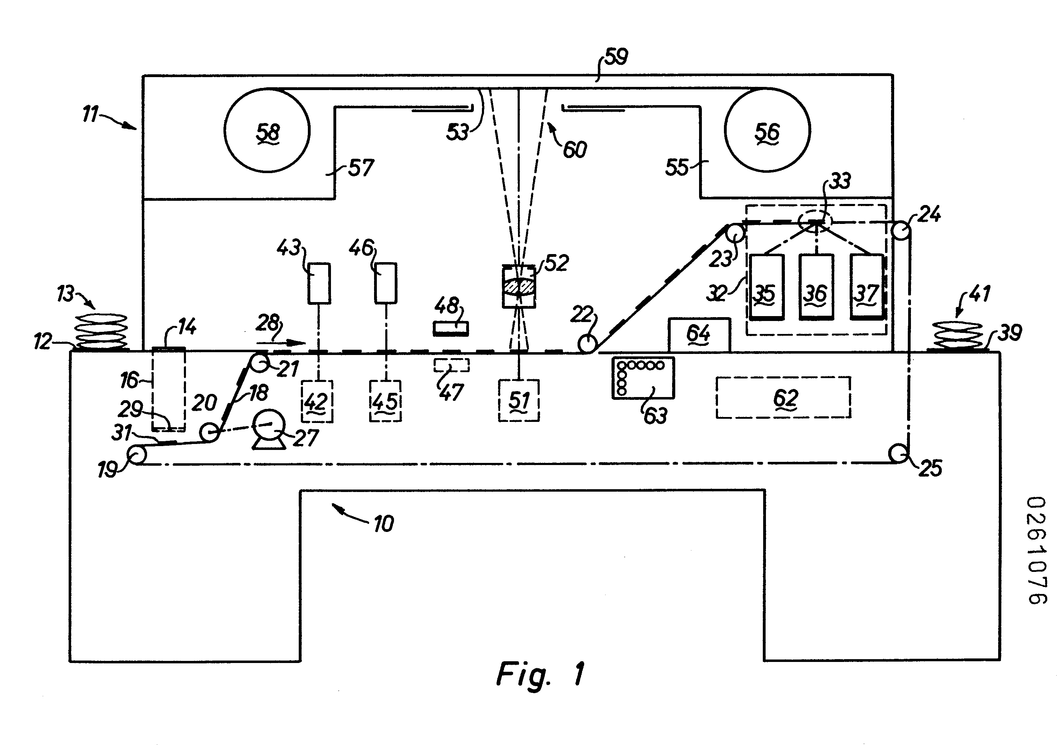

Die in Fig. 1 schematisch gezeigte Vorrichtung enthält ein Arbeitspult 10 und einen fest damit verbundenen Pultaufsatz 11. Auf der einen Seite des Arbeitspults befindet sich eine Ablagefläche 12 für Auftragstaschen 13, von denen jede die Dias für einen Kopierauftrag enthält. Neben der Auflagefläche ist eine Eingabestation 14, durch die die Dias in ein Magazin 16 eingefüllt werden können. Weiter ist eine Transporteinrichtung für die Dias vorgesehen mit einem endlosen Transportband 18, das über eine Mehrzahl Führungs- und/oder Antriebsrollenpaare 19, 20, 21, 22, 23, 24 und 25 geführt ist. Das Transportband ist als vielgliedriges Band ausgebildet, wobei die Abmessungen jedes Glieds so gewählt sind, dass ein gerahmtes Dia eingelegt werden kann. Mindestens ein Rollenpaar ist als Antriebsrollenpaar 20 ausgebildet und mit einem Motor 27 bewegungsverbunden, der für das schrittweise Verschieben des Transportbands in der Richtung des Pfeils 28 erregbar ist. Die Förderbahn für die Dias beginnt zwischen den Umlenkrollen 19, 20 (auf der linken Seite des gezeigten Arbeitspults), wo das Förderband unter dem elektrisch gesteuerten Auslass 29 des Magazins eine Ladestation 31 bildet, und endet zwischen den Umlenkrollen 23, 24 (auf der rechten Seite des Arbeitspults), wo in einer Entladestation 32 die einlaufenden Dias auf eine Weiche 33 geschoben werden, von wo sie je nach Weichenstellung in einen der drei Ausgabekanäle 35, 36 oder 37 der Ausgabestation gleiten. An jedem Ausgabekanal ist eine nicht gezeigte Einrichtung zum Befestigen einer Auftragstasche, in die die Dias hineinfallen, angeordnet. Seitlich der Ausgabestation ist eine weitere Ablagefläche 39 für die mit den kopierten Dias gefüllten Auftragstaschen 41 vorgesehen.

Die Transportbahn läuft zwischen den Führungsrollenpaaren 21, 22 in den Arbeitsbereich einer ersten Einrichtung 42, 43 zum Messen der Lichtdurchlässigkeit der Dias für die drei Grundfarben des Kopiermaterials. Zu dieser Einrichtung gehört eine unter der Arbeitsfläche des Arbeitspults angeordnete Beleuchtungseinrichtung 42 und ein über der Arbeitsfläche am Pultaufsatz befestigter optoelektronischer Sensor 43. Die Beleuchtungseinrichtung enthält mindestens eine Lichtquelle, einen Kondensor und einen Diffusor und dem Sensor ist für jede der Grundfarben mindestens ein Farbfilter zugeordnet, welche Filter nacheinander in den Lichtweg zwischen der Beleuchtungseinrichtung und dem Sensor einschiebbar sind. Das am Sensor abnehmbare Ausgangssignal entspricht dann der jeweiligen Lichtdurchlässigkeit eines im Lichtweg befindlichen Dias in dem vom Filter durchgelassenen Spektralbereich.

Längs der Transportbahn und der ersten Einrichtung 42, 43 benachbart ist eine zweite Einrichtung zum Messen der Lichtdurchlässigkeit der Dias in drei Grundfarben vorgesehen. Auch diese Einrichtung enthält eine Beleuchtungseinrichtung 45 und einen optoelektronischen Sensor 46 und unterscheidet sich von der Einrichtung 42, 43 hauptsächlich darin, dass die Durchlässigkeitsbereiche der dem Sensor vorschaltbaren Filter den Grundempfindungskurven des menschlichen Auges entsprechen. Die Auswertung der Ausgangssignale der beiden Einrichtungen 42, 43 und 45, 46 ermöglicht, beim nachfolgenden Kopieren die Belichtungszeiten für die einzelnen Farbauszüge derart zu steuern, dass der für das menschliche Auge erkennbare Farbton und die Farbsättigung der Kopie derjenigen des Dias entspricht.

Nach der zweiten Einrichtung 45, 46 durchläuft die Transportbahn eine Einrichtung zum Reinigen der Diaoberflächen, in der angelagerte Staubteilchen mit Hilfe einer Korona-Entladung entfernt werden.

Der Reinigungseinrichtung folgt, immer in Richtung der Transportbahn, eine Projektionseinrichtung, mit der das Bild eines Dias auf das Kopiermaterial übertragen werden kann. Diese Einrichtung enthält wieder eine unter der Arbeitsfläche eingebaute Beleuchtungseinrichtung 51 mit einem Lampenkasten, mit einem Kondensor, mit einem Satz wahlweise in den Lichtweg einschiebbaren Farbfiltern und einer Streuscheibe und einem über der Arbeitsfläche angeordneten Projektionsobjektiv 52 mit einer verstellbaren Blende und einem Verschluss.

Der obere Teil der Pultaufsatzes 11 ist als mehrteiliger, lichtdichter Kasten ausgebildet. Der Kasten enthält ein erstes Fach 55 zum Einlegen einer Kassette 56 mit einem Vorrat an bandförmigem, unbelichtetem Kopiermaterial und ein zweites Fach 57 zum Einlegen einer Kassette 58, in die das belichtete und zu entwickelnde Kopiermaterial eingeführt wird. Die beiden Fächer sind durch einen Kanal 59 verbunden, in dem eine Belichtungsbühne 60 und eine nicht gezeigte Einrichtung für den Vorschub des Kopiermaterials 53 aus der Vorratskassette in die Entwicklungskassette angeordnet sind.

Im Arbeitspult ist weiter eine elektronische Steuereinrichtung 62 eingebaut. Diese Steuereinrichtung enthält einen Rechner, einen Speicher, ein Leitwerk, einen Eingabe- und einen Ausgabekanal und ist mit der Tastatur 63 eines Eingabegeräts, dem Auslass 29 des Einfüllmagazins, dem Antriebsmotor 27 für das Transportband, den Messgeräten 42, 43 und 45, 46 für die Farbdichten der Dias, der Dia-Reinigungseinrichtung 47, 48, der Projektionseinrichtung 51, 52, der Weiche 33 in der Entladestation sowie mit einem Drucker 62 und der Vorschubeinrichtung für das Kopiermaterial verbunden. Die entsprechenden elektrischen Leitungen sind der übersichtlicheren Darstellung wegen in der Figur nicht gezeigt. Die elektronische Steuereinrichtung aktiviert die einzelnen Einrichtungen und Geräte, synchronisiert den Ablauf der einzelnen Arbeitsgänge, verarbeitet die Messwerte und steuert in Uebereinstimmung damit die Belichtungszeiten für das Kopiermaterial.

Es wird angenommen, dass die beschriebene Vorrichtung von jedem Fachmann aus handelsüblichen Baugruppen zusammengestellt werden kann und einzelne Einrichtungen, Geräte sowie die elektrischen Schaltungen und Steuerungen in Uebereinstimmung mit den speziellen Anforderungen ausgeführt werden können, weshalb auf deren detaillierte Beschreibung hier ausdrücklich verzichtet wird.

Beim Betrieb der beschriebenen Vorrichtung werden mit der Uebernahme einer Auftragstasche über die Tastatur des Eingabegeräts ein "Auftragsbeginn"-Signal oder eine Serienummer an die elektronische Steuereinrichtung eingegeben. Dann werden die der Auftragstasche entnommenen Dias nacheinander seitenrichtig in die Einlassöffnung der Eingabestation geschoben und zugleich bzw. in der gleichen zeitlichen Reihenfolge die Anzahl der von dem eingeschobenen Dia herzustellenden Kopien eingespeichert. Sobald alle Dias in die Eingabestation eingeschoben sind, wird die Auftragstasche in den Drucker eingeführt und ein "Auftragsende"-Signal eingetastet. Der Drucker druckt dann alle für das spätere Zusammenführen der Kopien mit den Dias und das Verrechnen des Auftrags wesentlichen Angaben auf die Auftragstasche, die da nach vor einem von der Steuereinrichtung bezeichneten Ausgabekanal abgestellt wird. Das Abstellen der Auftragstasche beim Ausgabekanal wird an die Steuereinrichtung zurückgemeldet, die dann im Takt des Vorschubs des Transportbands den Auslass des Diamagazins öffnet, so dass die Dias in der vorgegebenen Reihenfolge auf die Glieder des Transportbands gelegt werden. Die Steuereinrichtung für den Antriebs des Transportbands und eine Schrittzähleinrichtung gewährleisten, dass die in den Pausen zwischen aufeinanderfolgenden Transportschritten durchgeführten Messungen der Lichtdurchlässigkeiten der Dias einem bestimmten Dia zugeordnet werden und das Kopiermaterial während des Aufenthalts dieses bestimmten Dias in der Projektionseinrichtung mit den von der Steuereinrichtung aus den Durchlässigkeitsmessungen bestimmten optimalen Belichtungszeiten belichtet wird. Schliesslich stellt die Steuereinrichtung im Zusammenwirken mit dem Transportbandantrieb und dem Schrittzähler die Weiche in der Entladestation derart, dass die Dias jedes Auftrags nach dem Kopieren wieder in die zugeordnete Auftragstasche eingefüllt werden.

Es versteht sich, dass die beschriebene Vorrichtung auf vielerlei Weise abgewandelt und an spezielle Bedürfnisse angepasst werden kann. Beispielsweise ist es möglich, mehrere Projektionsobjektive vorzusehen, um Kopien mit unterschiedlichen Abmessungen herzustellen. Dabei kann die Objektivhalterung mittels eines von der elektronischen Steuereinrichtung erregbaren Antriebs für die automatische Scharfeinstellung höhenverstellbar sein, und die Höhenverstellung kann zur automatischen Anpassung der Belichtungszeiten an die entsprechenden Kopierformate verwendet werden. Die Einrichtung zum Bestimmen der Lichtdurchlässigkeiten der Dias kön nen drei fotoelektronische Sensoren enthalten, von denen jeder mit einem zugeordneten Farbfilter zusammenwirkt, was bei geeigneter Abbildungsoptik ermöglicht, die Durchlässigkeit in den drei Spektralbereichen gleichzeitig zu messen. Ebensogut ist es möglich, nur einen Sensor zu verwenden, der mit auswechselbaren Filtern zusammenwirkt, beispielsweise einem Filterrad, was dann drei aufeinanderfolgende Messungen erfordert. Dazu ist es möglich, diese beiden beschriebenen Einrichtungen zum Messen der Lichtdurchlässigkeit der Dias zu einer einzigen Einrichtung zusammenzufassen, in der drei Farbfilter für die spektrale Empfindlichkeit des Kopiermaterials und drei für die spektrale Empfindlichkeit des menschlichen Auges angeordnet sind, welchen Filtern wiederum je ein fotoelektronischer Sensor oder bei entsprechender Konstruktion ein gemeinsamer Sensor zugeordnet werden kann. Natürlich ist es auch möglich, auf die zweite Einrichtung zum Bestimmen der Durchlässigkeit der Dias in den dem menschlichen Auge entsprechden Spektralbereichen zu verzichten und diesbezügliche Korrekturwerte über die Tastatur des Eingabegeräts in die elektronische Steuerschaltung einzuspeichern.

Um die Verweilzeit des Dias in der Projektionseinrichtung zu verkürzen, kann eine Beleuchtungseinrichtung verwendet werden, die drei Lichtquellen mit dazugehörigen Filtern aufweist. Diese Anordnung ermöglicht, das Kopiermaterial gleichzeitig mit allen drei Grundfarben zu belichten, wobei für notwendige Korrekturen der Lichtintensität oder der Farbzusammensetzung die Helligkeit der Lichtquellen gesteuert wird. Es kann auch vorteilhaft sein, die Transportbahn in drei Sektionen zu unterteilen, von denen jede ein Transportband aufweist. Die erste Sektion ist als Diamagazin ausgebildet, dessen Transportband kontinuierlich angetrieben wird, nicht in Glieder unterteilt ist, sondern die aufgelegten Dias reibungsschlüssig mitführt, bis sie an den Auslass des Magazins oder an vor diesem Auslass aufgestaute Dias anstossen. Die zweite Sektion entspricht der Transportbahn vom Auslass des Magazins durch die Mess- und Reinigungseinrichtung bis nach der Projektionseinrichtung. Das Transportband für diese Sektion ist ebenfalls kontinuierlich angetrieben und führt die Dias ebenfalls reibungsschlüssig mit, was ermöglicht, die Dias in den Messeinrichtungen und in der Projektionseinrichtung mit Hilfe von Projektionsstiften genau zu positionieren. Die dritte Sektion führt vom Ausgang der Projektionseinrichtung zur Ausgabeeinrichtung. Das Transportband in dieser Sektion ist in Glieder unterteilt, von denen jedes ein Dia aufnehmen kann, und wird schrittweise angetrieben. Dadurch wird sichergestellt, dass die Dias voneinander getrennt in die Ausgabestation einlaufen und in der Weiche sicher in den vorgesehenen Ausgabekanal geführt werden. Unter jedem der drei als Fallschacht ausgebildeten Ausgabekanäle ist vorzugsweise eine automatische Verpackungseinrichtung angeordnet, die die Dias in der gleichen Reihenfolge, in der sie kopiert wurden, sammeln und in dieser Reihenfolge fixieren, bevor sie in die bereitgestellte Auftragstasche eingegeben werden.

## Patentansprüche

1. Vorrichtung zum Kopieren von gerahmten Farbdiapositiven auf Farbumkehrmaterial mit einer Einrichtung zum integralen oder bereichsweisen Messen der Lichtdurchlässigkeit der Dias in den Grundfarben des Kopiermaterials, mit einer Projektionseinrichtung zum Abbilden von Farbauszügen des Dias auf dem Kopiermaterial und mit einer elektronischen Steuereinrichtung, die die Belichtungszeit für jeden Farbauszug in Abhängigkeit von den gemessenen Lichtdurchlässigkeiten und von mittels einer Tastatur eingegebenen Korrekturwerten bestimmt, sowie nach jeder vollständigen Belichtung den Weitertransport des Kopiermaterials in der Bildbühne der Projektionseinrichtung steuert, dadurch gekennzeichnet, dass für die Ausführung aller zum Kopieren erforderlichen Arbeitsgänge an einem Arbeitsplatz eine Transporteinrichtung (18, 27) für den schrittweisen Transport der Dias von einer Eingabestation (14) zur Einrichtung (42, 43) zum Messen der Lichtdurchlässigkeit zur Projektionseinrichtung (51, 52) und zu einer Ausgabestation (32, 38) vorgesehen ist und die elektronische Steuereinrichtung (62) weiter die Schrittlänge und die Standzeit zwischen aufeinanderfolgenden Schritten der Transporteinrichtung sowie das Aktivieren der Einrichtung zum Messen der Lichtdurchlässigkeit und der Projektionseinrichtung synchron mit den Schritten der Transporteinrichtung steuert.

2. Vorrichtung nach Anspruch 1, dadurch gekennzeichnet, dass die Tastatur (63) zum Eingeben von Kopierauftragsdaten geeignet ist und die elektronische Steuereinrichtung (62) die Projektions- und die Transporteinrichtung (51, 52 bzw. 18, 27) in Uebereinstimmung mit den eingegebenen Kopierauftragsdaten steuert.

3. Vorrichtung nach Anspruch 1, dadurch gekennzeichnet, dass zum Eingeben eines Vorrats an zu kopierenden Dias unabhängig von der Schrittfrequenz der Transporteinrichtung (18, 27) zwischen der Eingabestation (14) und der Transporteinrichtung ein zum Speichern der Dias in der eingegebenen Reihenfolge geeignetes Diamagazin(16) vorgesehen ist, dessen Auslass (29) von der elektronischen Steuereinrichtung gesteuert wird.

4. Vorrichtung nach Anspruch 3, dadurch gekennzeichnet, dass für eine praktisch ununterbrochene Kopierfolge die Tastatur (63) eine Taste enthält für ein Signal an die elektronische Steuereinrichtung (62), wenn alle zu einem Auftrag gehörenden Dias in das Diamagazin (16) eingegeben sind und die Ausgabestation (38) mehrere Ausgabekanäle (35, 36, 37) enthält, die wahlweise mittels einer Weiche (32) mit der Transporteinrichtung (18) verbindbar sind und zum Ausgeben aller zu einem Auftrag gehörender Dias durch den gleichen Ausgabekanal die elektronische Steuereinrichtung die Weiche in Uebereinstimmung mit dem vorgenannten Signal und der Anzahl der für den Transport dieser Dias von der Eingabestation zur Ausgabestation erforderlichen Transportschritten steuert.

5. Vorrichtung nach Anspruch 1, dadurch gekennzeichnet, dass zum Verbessern des Farbtons und der -sättigung der Kopien zusätzlich zu der Einrichtung (42, 43) zum Messen der Lichtdurchlässigkeit der Dias in den Grundfarben des Kopiermaterials eine mit der elektronischen Steuereinrichtung zusammenwirkende Einrichtung (45, 46) zum Messen der Lichtdurchlässigkeit der Dias in den entsprechenden Grundfarben des menschlichen Auges vorgesehen ist.

6. Vorrichtung nach Anspruch 1 oder 5, dadurch gekennzeichnet, dass die Einrichtung (42, 43) zum Messen der Lichtdurchlässigkeit der Dias zur Integralmessung vorgesehen ist.

7. Vorrichtung nach Anspruch 1 oder 5, dadurch gekennzeichnet, dass die Einrichtung (42, 43) zum Messen der Lichtdurchlässigkeit der Dias die Dias bereichsweise vermisst und die elektronische Steuereinrichtung (62) die einzelnen Bereiche in Abhängigkeit von deren Lage auf dem Dia unterschiedlich gewichtet und aus den unterschiedlich gewichteten Bereichen die zum Steuern der Belichtungszeit massgebliche Lichtdurchlässigkeit für jede Grundfarbe bestimmt.

8. Vorrichtung nach Anspruch 1, dadurch gekennzeichnet, dass ein Druckwerk (64) vorgesehen ist, das mindestens die mittels der Tastatur (63) in die elektronische Steuereinrichtung (62) eingegebenen Auftragsdaten auf den Auftragsbeutel druckt.

9. Vorrichtung nach Anspruch 4, dadurch gekennzeichnet, dass jedem Ausgabekanal (35, 36, 37) der Ausgabestation (38) eine Verpackungseinrichtung zugeordnet ist, die die Dias in der gleichen Reihenfolge, in der sie kopiert wurden, sammelt und in dieser Reihenfolge fixiert.

0261076

Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 008 557 (EASTMAN KODAK CO.) * Seiten 4-33; Figuren 1-9 * --- | 1-3,6,8 ,9 | G 03 B 27/46 G 03 B 27/62 |
| Y | EP-A-0 173 097 (FUJI PHOTOFILM CO.) * Seiten 5-44; Figuren 1-24 * --- | 1-3,5,8 ,9 | |
| Y | DE-A-3 422 297 (H. BRODHAG) * Seiten 13-18; Figuren 1-10 * --- | 1,3,5,6 | |
| A | EP-A-0 128 349 (AGFA-GEVAERT A.G.) * Zusammenfassung * --- | 7 | |
| A | RESEARCH DISCLOSURE, Nr 16054, August 1977, Seiten 57-59, Havant, GB; "Slide feeding mechanism associated with the control system of a photographic printer" ----- | 1,3,5,6 | |

**RECHERCHIERTE SACHGEBIETE (Int. Cl.4)**

G 03 B 27/46
G 03 B 27/62
G 03 B 27/73

Der vorliegende Recherchenbericht wurde für alle Patentansprüche erstellt

| Recherchenort | Abschlußdatum der Recherche | Prüfer |
|---|---|---|
| DEN HAAG | 10-12-1987 | BOEYKENS J.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

...............................................................
& : Mitglied der gleichen Patentfamilie, übereinstimmendes Dokument

EPO FORM 1503 03.82 (P0403)